Europäisches Patentamt

European Patent Office

Office européen des brevets

(19)

(11) Numéro de publication: **0 001 955**
**B1**

(12) **FASCICULE DE BREVET EUROPEEN**

(45) Date de publication du fascicule du brevet: **05.05.82**  (51) Int. Cl.³: **G 02 F 1/17**

(21) Numéro de dépôt: **78400158.8**

(22) Date de dépôt: **31.10.78**

(54) Electrode pour cellule d'affichage électrolytique et son procédé de fabrication.

(30) Priorité: **07.11.77 FR 7733383**

(43) Date de publication de la demande:
**16.05.79 Bulletin 79/10**

(45) Mention de la délivrance du brevet:
**05.05.82 Bulletin 82/18**

(84) Etats contractants désignés:
**CH DE GB NL**

(56) Documents cités:
**FR - A - 2 131 993**
**FR - A - 2 162 621**

(73) Titulaire: **COMMISSARIAT A L'ENERGIE ATOMIQUE Etablissement de Caractère Scientifique Technique et Industriel**
**B.P. 510**
**F-75752 Paris Cedex 15 (FR)**

(72) Inventeur: **Duchene, Jacques**
**23, Boulevard Maréchal Leclerc**
**F-38000 Grenoble (FR)**
Inventeur: **Meyer, Robert**
**1, rue Wilson**
**F-38610 Gieres (FR)**

(74) Mandataire: **Mongrédien, André et al,**
**c/o Brevatome 25, rue de Ponthieu**
**F-75008 Paris (FR)**

Courier Press, Leamington Spa, England.

Electrode pour cellule d'affichage électrolytique
et son procédé de fabrication

La présente invention a pour objet une électrode pour cellule d'affichage électrolytique.

De façon plus précise, elle concerne une électrode présentant par rapport aux électrodes connues actuellement, une résistance améliorée à la corrosion électrochimique dans les conditions de fonctionnement d'une cellule d'affichage électrolytique telle qu'une cellule à dépôt métallique.

Une cellule d'affichage électrolytique à dépôt métallique est généralement constituée par un électrolyte contenant des ions métalliques, intercalé entre une première paroi revêtue d'une électrode constituée par une couche conductrice transparente de forme adaptée à l'affichage et une seconde paroi revêtue d'une contre-électrode, et par des moyens d'alimentation électrique reliés à l'électrode et à la contre-électrode pour provoquer, par réaction électrochimique à partir desdits ions, le dépôt ou la dissolution d'une couche métallique sur ladite électrode; ainsi, l'affichage est obtenu lorsqu'on provoque sur l'électrode le dépôt ou la dissolution de la couche de métal dont les propriétés optiques (réflexion, transmission ou absorption) sont susceptibles de faire naître un signe (caractère, courbe, segment, etc.). Dans les cellules de ce type, l'électrode est habituellement constituée par une couche de matériau transparent conducteur de l'électricité présentant de bonnes propriétés de conduction électrique et de transmission optique dans le domaine visible, par exemple par une couche d'oxyde d'indium.

Cependant, les électrodes de ce type connues actuellement ont l'inconvénient de ne pas présenter une résistance électrochimique satisfaisante, notamment en raison de l'apparition de réactions secondaires parasites qui peuvent se produire sur l'électrode au cours du fonctionnement de la cellule, sous l'effet des phénomènes de surtensions. Ainsi, lorsqu'on utilise des électrodes transparentes en oxyde d'indium avec un électrolyte à base de sel d'argent, la réaction secondaire parasite qui consiste en une réduction de l'oxyde d'indium, se produit généralement lorsque la surtension sur l'électrode est supérieure à 800 mV par rapport à une électrode d'argent $Ag/Ag^+$ et elle conduit à une usure importante de l'électrode après environ 200 à 300 cycles de fonctionnement.

Pour éviter cet inconvénient, on a envisagé de réaliser les électrodes transparentes des cellules d'affichage électrolytique en matériau présentant une meilleure résistance à la corrosion électrochimique, par exemple en oxyde d'étain.

Cependent, l'emploi de matériaux de ce type conduit à d'autres inconvénients; en effet, leurs caractéristiques de conduction électrique n'étant pas satisfaisantes, on doit les utiliser, sous forme de couches d'épaisseur beaucoup plus importante, ce qui nuit aux qualités de transparence de l'électrode; par ailleurs, en raison de leurs propriétés de résistance à la corrosion, ils sont difficiles à graver de façon homogène.

On connaît également par le brevet français 2.131.993 des cellules d'affichage électrolytique dans lesquelles les problèmes de corrosion électrochimique de l'électrode sont résolus en utilisant une électrode multicouche comprenant une couche externe en métal noble.inactif.

Cependent, l'utilisation d'une couche externe en métal noble ne permet pas de résoudre les problèmes de corrosion électrochimique et de conductivité qui se posent notamment dans le cas d'électrodes transparentes.

La présente invention a précisément pour objet une électrode pour cellule d'affichage électrolytique qui pallie les inconvénients précités, car elle possède une résistance électrochimique améliorée tout en ayant de bonnes propriétés de conduction électrique et de transmission optique.

L'électrode pour cellule d'affichage électrolytique selon l'invention est constituée par une couche d'oxyde conducteur transparent, présentant une forme adaptée à l'affichage, déposée sur un support isolant électrique, ledit oxyde conducteur étant susceptible d'être transformé par des réactions secondaires en présence d'une substance sur l'électrode, et elle se caractérise en ce que ladite couche, dite première couche, est revêtue d'une couche mince conductrice, dite seconde couche, réalisée en un oxyde conducteur transparent, différent de celui de ladite première couche et permettant de diminuer, dans les conditions de fonctionnement de ladite cellule, la surtension sur l'électrode, la conductivité électrique et la transmission optique de ladite électrode étant peu diminuées par rapport à celle de ladite première couche.

L'électrode telle que caractérisée ci-dessus, tire avantageusement profit du fait qu'en disposant sur la première couche une seconde couche d'épaisseur très faible en oxyde conducteur transparent, non seulement on isole la première couche de l'électrolyte, mais on parvient de plus à abaisser, lors du fonctionnement de la cellule, la surtension de dépôt de la substance servant a l'affichage. Ainsi on évite, au cours du fonctionnement de la cellule d'affichage électrolytique, l'apparition des réactions secondaires susceptibles de dégrader l'électrode, tout en obtenant néanmoins des caractéristiques de conduction électrique et de transmission optique de l'électrode, sensiblement équivalentes à celles de la première couche.

Avantageusement, lorsque la cellule d'affichage est une cellule à dépôt d'argent, ladite première couche est en oxyde d'indium dopé à l'étain et ladite seconde couche est en oxyde d'étain dopé à l'antimoine ou au cadmium.

De préférence, les épaisseurs respectives de ladite première couche et de ladite seconde couche sont telles que l'ensemble formé par les deux couches présente une résistance carrée de 20 à 25 ohms par carré et une transmission optique de 70 à 80%.

Dans le cas d'une première couche en oxyde d'indium et d'une seconde couche en oxyde d'étain dopé à l'antimoine ou au cadmium, l'épaisseur de ladite première couche est avantageusement comprise entre 1000Å et 1 $\mu$ et l'épaisseur de ladite seconde couche est avantageusement comprise entre 100 et 500 Å.

Ainsi, dans les conditions de fonctionnement d'une cellule d'affichage électrolytique utilisant comme électrolyte un sel d'argent et comme électrode une électrode transparente comprenant une première couche d'oxyde d'indium dopé à l'étain et une seconde couche d'oxyde d'étain dopé à l'antimoine ou au cadmium, une épaisseur de la deuxième couche aussi faible que 100 Å est suffisante pour abaisser la surtension électrique créée sur l'électrode, lors du fonctionnement de la cellule, à une valeur telle que les réactions secondaires susceptibles de dégrader l'électrode et, en particulier, la réaction de réduction de l'oxyde d'indium en sous-oxyde d'indium, ne puissent se produire.

Par ailleurs, on note qu'une électrode de ce type présente des qualités de résistance électrique et de transparence équivalentes à celles de la première couche d'oxyde d'indium.

L'invention a également pour objet un procédé de fabrication d'une électrode pour cellule d'affichage électrolytique.

Ce procédé consiste a déposer successivement sur un support isolant électrique une première couche d'un matériau conducteur de l'électricité et une seconde couche d'un autre matériau conducteur de l'électricité, et à réaliser successivement une gravure électrochimique de ladite seconde couche et une gravure chimique de ladite première couche.

Avantageusement, on dépose ladite première couche et ladite seconde couche par pulvérisation cathodique radiofréquence. De préférence, après avoir déposé ladite première couche, on soumet cette dernière à un traitement de surface pour éviter la formation d'un film isolant électrique sur ladite première couche, par exemple, par bomardement ionique afin de nettoyer et dégazer ladite première couche.

Par ailleurs, on soumet de préférence ladite première couche à un traitement de recuit, avant de déposer ladite seconde couche.

Le procédé de l'invention se révèle particulièrement avantageux pour la réalisation sur un support isolant d'un revêtement comportant une couche externe en oxyde d'étain, présentant une forme déterminée.

En effet, la réalisation d'une telle couche en oxyde d'étain pose certains problèmes car les procédés classiques de gravure ne permettent pas d'éliminer aux endroits voulus de l'oxyde d'étain déposé en couche continue sur un support.

Selon l'invention, ce résultat peut être obtenu par gravure électrochimique si l'on dépose tout d'abord sur le support isolant une couche d'un matériau conducteur de l'électricité susceptible d'être gravé par tout moyen, par exemple par voie chimique avant de déposer une couche continue d'oxyde d'étain.

Ce procédé de réalisation sur un support isolant d'un revêtement comportant une couche externe en oxyde d'étain, présentant une forme déterminée, consiste à déposer sur ledit support isolant électrique une première couche d'un matériau conducteur de l'électricité susceptible d'être éliminée par tout moyen, puis à déposer sur ladite première couche une seconde couche en oxyde d'étain, et à réaliser ensuite successivement une gravure électrochimique de ladite seconde couche en oxyde d'étain puis une gravure de ladite première couche pour éliminer ladite première couche aux endroits où ladite seconde couche a été attaquée par gravure électrochimique.

L'invention sera mieux comprise à la lecture de la description qui suit donnée à titre d'exemple illustratif et non limitatif en se référant au dessin annexé sur lequel:

— la fig. 1 est une représentation schématique d'une cellule d'affichage électrolytique utilisant une électrode transparente selon l'invention, et

— la fig. 2 est une représentation schématique d'une cellule électrochimique utilisée pour réaliser la gravure électrochimique de la seconde couche d'une électrode transparente, selon l'invention.

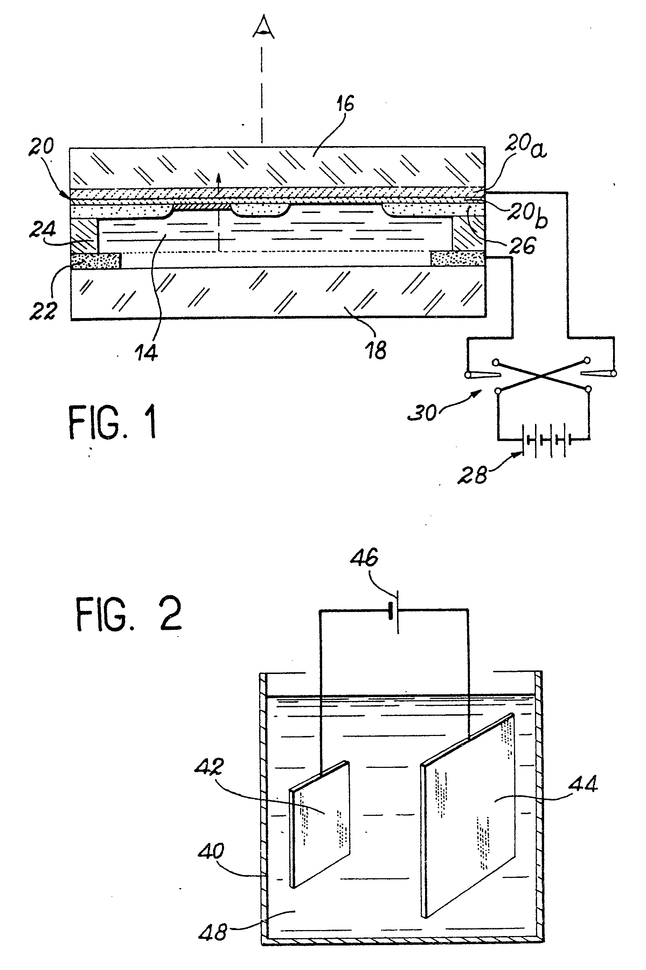

En se reportant à la fig. 1, on peut voir une cellule d'affichage électrolytique comprenant un électrolyte 14 intercalé entre deux parois 16 et 18 recouvertes respectivement d'une électrode 20 et d'une contre-électrode 22, toutes deux reliées à une source de tension 28 par l'intermédiaire d'un commutateur 30 qui permet d'appliquer entre l'électrode 20 et la contre-électrode 22 une différence de potentiel continu dans un sens ou dans l'autre, selon la position du commutateur 30. Des cales 24 sont intercalées entre l'électrode 20 et la contre-électrode 22 afin de donner à l'électrolyte une épaisseur appropriée, un isolant électrique 26 ètant disposé entre la cale 24 et l'électrode 20. Selon l'invention, l'électrode 20 comprend deux couches superposées 20a et 20b, la première couche 20a en contact avec la paroi 16 ètant réalisée, par exemple, en oxyde d'indium dopé à l'étain et la seconde couche 20b en contact avec l'électrolyte 14, étant réalisée en oxyde d'étain dopé au cadmium ou en oxyde d'étain dopé à l'antimoine.

Dans cet exemple, la couche 20a d'oxyde d'indium dopé à l'étain a une épaisseur de 2000

À et elle présente une résistance carrée de 20 Ω par carré et une transmission optique de 80 à 85%; la couche 20b d'oxyde d'étain dopé à l'antimoine a une épaisseur de **500 Å**. L'ensemble des deux couches formant l'électrode 20 de la cellule présente:

— une résistance carrée de 20 à 25 Ω par carré et,

— une transmission optique de 70% environ.

Ainsi, la présence de la deuxième couche d'oxyde d'étain ne modifie que très peu les caractéristiques de conduction électrique et de transmission optique de la première couche d'oxyde d'indium dopé à l'étain, tout en conférant, par ailleurs, à l'électrode 20, une résistance à la corrosion électrochimique suffisante pour supporter, lors du fonctionnement de la cellule, en présence d'un électrolyte à base d'halogénure d'argent tel que du bromure ou de l'iodure d'argent, plus de $10^7$ commutations sans le moindre signe de dégradation.

Lors du fonctionnement de la cellule, on réalise l'affichage d'un signe sur l'électrode transparente en connectant l'électrode 20 au pôle négatif de la source de tension de façon à obtenir un dépôt d'argent de 50 Å sur l'électrode 20 formée des couches 20a et 20b qui présentent une forme adaptée au signe à afficher, ce dernier pouvant être observé aisément de l'extérieur puisque la couche d'argent de cette épaisseur déposée par électrolyse absorbe la lumière.

Le signe affiché peut ensuite être effacé en inversant la position du commutateur 30 pour relier l'électrode 20 au pôle positif de la source de tension de façon à assurer la dissolution du dépôt d'argent formé au préalable sur l'électrode 20.

Pour réaliser une électrode de ce type, on dépose tout d'abord sur un support transparent constitué par exemple par une lame de verre, une première couche d'oxyde d'indium dopé à l'étain, puis une seconde couche d'oxyde d'étain dopé à l'antimoine ou au cadmium.

Le dépôt des deux couches est avantageusement réalisé par pulvérisation cathodique radiofréquence dans une atmosphère oxydante.

Après avoir déposé la première couche, on soumet, de préférence, cette dernière à un traitement de recuit puis à un traitement de surface par bombardement ionique, pour dégazer parfaitement la surface de la couche et établir ainsi un régime d'équilibre avant le dépôt de la deuxième couche.

En effet, si l'on ne procède pas à ce traitement de surface, on risque d'obtenir, lors du dépôt de la seconde couche, qui est effectué également en présence d'oxygène, la formation d'un film d'oxyde isolant en raison d'une augmentation incontrôlée de la pression d'oxygène régnant dans l'enceinte de dépôt, cette augmentation étant provoquée par un dégazage du support revêtu de la première couche.

Aussi, le traitement de dégazage par bombardement ionique permet d'éviter la formation d'un film isolant entre les deux couches déposées et d'assurer ainsi une bonne conduction électrique de l'ensemble des deux couches.

On effectue ensuite un traitement de gravure sur les deux couches afin d'obtenir une électrode transparente de forme adaptée à l'affichage.

Etant donné la nature très résistante de la seconde couche d'oxyde d'étain, les méthodes classiques de gravure chimique généralement adoptées pour graver les couches d'oxyde d'indium ne peuvent être utilisées car elles ne permettent pas d'attaquer la couche d'oxyde d'étair dopé à l'antimoine.

En effet, ce dernier ne peut être dissout chimiquement que par l'hydrogène naissant, ce qui conduit à une attaque violente et inhomogène de la couche, ne permettant pas d'obtenir une bonne définition des parties gravées.

Cependent, il est possible de graver la couche d'oxyde d'étain par bombardement ionique, mais cette mèthode présente certains inconvénients tels qu'une durée de gravure assez longue, par exemple, de l'ordre d'une heure, pour attaquer une épaisseur de quelques milliers d'Å et l'emploi d'équipements coûteux qui conduisent à un coût de réalisation élevé de l'électrode.

Aussi, selon l'invention, on effectue successivement la gravure de chacune desdites couches, en attaquant tout d'abord par une méthode électrochimique la seconde couche d'oxyde d'étain, puis en attaquant chimiquement selon une méthode classique, les parties de la première couche mises à nu, après l'attaque électrochimique de la deuxième couche.

L'attaque électrochimique de la seconde couche consiste à réduire en milieu acide l'oxyde d'étain sous l'action d'une tension négative de l'ordre de 2 à 3 volts, et elle peut être réalisée, par exemple, dans une cellule électrolytique telle que celle qui est représentée sur la fig. 2.

Dans cette cellule, la cathode 42 est constituée par l'électrode à graver et elle est disposée à une distance de quelques millimètres de l'anode 44 réalisée en graphite ou en platine. Les électrodes 42 et 44 sont reliées à un générateur de courant électrique 46 et plongées dans un électrolyte approprié 48 constitué par une solution acide.

On précise que le dessin de gravure est défini au préalable sur l'électrode par des méthodes classiques, par exemple, par photolithogravure ou par sérigraphie.

Cette méthode de gravure successive des deux couches se révèle particulièrement intéressante car elle présente l'avantage d'être à la fois rapide et peu onéreuse et de permettre d'obtenir une définition du dessin comparable à celle que l'on peut attendre des méthodes par bombardement ionique, tout au moins pour des sillons de gravure d'une largeur de l'ordre de 20 à 100 μ.

Par ailleurs, cette méthode de gravure est parfaitement adaptée pour la gravure d'une électrode transparente comportant deux couches de matériau transparent conducteur de l'électricité car, si l'électrode ne comportait qu'une seule couche, elle ne pourrait conduire à une bonne définition du dessin à graver sur l'électrode.

En effet, dans ce cas, seule la couche en cours de gravure peut assurer la conduction électrique nécessaire pour obtenir la gravure électrochimique. Aussi, il s'ensuit que les zones proches des amenées de courant sont gravées plus rapidement que les zones centrales et que de ce fait on obtient des zones surgravées près des amenées de courant et des ilôts non gravés au centre de l'électrode lorsque ces derniers se trouvent électriquement isolés, au cours du traitement de gravure.

Aussi, la présence de cette première couche d'oxyde d'indium sur la lame support transparente permet d'assurer la conduction électrique nécessaire pour la gravure électrochimique et d'obtenir ainsi une gravure homogène sur l'ensemble de la couche.

On donne, ci-après, un exemple de réalisation d'une électrode transparente, comprenant une première couche d'oxyde d'indium dopé à l'étain contenant 10% d'étain (en atome %) et une deuxième couche d'oxyde d'étain dopé à l'antimoine contenant 20% d'antimoine (en atome %), l'épaisseur de la première couche étant de 2000 Å et l'épaisseur de la deuxième couche de 500 Å.

On réalise, tout d'abord, le dépôt de la première couche d'oxyde d'indium dopé à l'étain sur le support maintenu à la température ambiante, en atmosphère légèrement oxydante par pulvérisation cathodique radiofréquence à partir d'une cible constituée d'oxyde d'indium et d'étain de façon à obtenir une couche de 2500 Å d'épaisseur.

On soumet ensuite la couche ainsi obtenue à un traitement de recuit, à une température de 400°C, sous un vide secondaire (inférieur à $10^{-5}$ torr), pendant environ 2 heures, et on obtient ainsi une couche d'oxyde d'indium présentant des caractéristiques optimales de transmission optique et de conduction electrique: une transmission de 85 à 90% et une résistance carrée de 15 à 20 ohms par carré.

On soumet ensuite la couche à un traitement de surface par bombardement ionique qui consiste à soumettre le support recouvert de la première couche et chauffé à 400°C, à un bombardement ionique, pendant une durée de trois à cinq minutes, dans une atmosphère de pulvérisation contenant 10% d'oxygène, à une puissance de 500 watts, ce qui entraîne une réduction de l'épaisseur de la première couche de l'ordre de 300 à 500 Å environ.

Après ce traitement, on dépose la deuxième couche d'oxyde d'étain dopé à l'antimoine par pulvérisation cathodique radiofréquence, sous une puissance de 1 kwatt, dans une atmosphère de pulvérisation contenant également 10% d'oxygène, pendant environ 1 minute 1/2 à 2 minutes.

Dans ces conditions, la deuxième couche déposée présente une épaisseur d'environ 500 Å et l'ensemble des deux couches possède une résistance électrique carrée de 20 à 25 ohms par carré et une transmission optique de 70% environ.

On soumet ensuite le substrat revêtu des deux couches à un traitement de gravure qui a pour but de former sur l'électrode des sillons de 30 μ de large pour former un dessir adapté à l'affichage.

Pour réaliser cette gravure, on dépose tout d'abord sur la deuxième couche une résine polymérisable qui est soumise ensuite à une irradiation, selon le tracé du dessin que l'on veut obtenir, afin de durcir la résine et protéger ainsi les zones de la deuxième couche qui ne devront pas être éliminées lors du traitement de gravure.

Aprés irradiation, on dissout la résine photopolymérisable non durcie pour mettre à nu les parties de la deuxième couche qui devront être éliminées par attaque électrochimique.

L'ensemble ainsi obtenu ets ensuite introduit comme cathode 42 dans une cellule électrochimique telle qui celle représentée sur la Fig. 2 dans laquelle l'anode 44 est constituée par une plaque de platine, et l'électrolyte 48 par une solution aqueuse d'acide chlorhydrique contenant 10% d'acide chlorhydrique en volume, la distance entre les électrodes étant d'environ 5 mm. Une tension de 2,2 volts est maintenue entre les deux électrodes, pendant une durée d'environ 1 minute, ce qui permet d'obtenir la réduction de l'oxyde d'étain constituent la deuxième couche et d'éliminer cette deuxième couche aux endroits voulus.

L'ensemble ainsi obtenu est ensuite extrait de la cellule électrochimique, puis plongé dans un bain d'acide phosphorique maintenu à une température de 115°C pendant une durée de sept minutes afin d'éliminer par attaque chimique la couche d'oxyde d'indium aux endroits où elle n'est plus recouverte d'oxyde d'étain.

Après cette opération, on dissout la résine durcie ayant servi à définir les sillons des gravures dans de l'acide nitrique fumant. L'electrode obtenue est ensuite rincée à l'eau, puis à l'alcool méthylique.

## Revendications

1. Electrode pour cellule d'affichage électrolytique, constituée par une couche d'oxyde conducteur transparent présentant une forme adaptée à l'affichage, déposée sur un support isolant électrique, ledit oxyde conducteur étant susceptible d'être transformé par des réactions secondaires en présence d'une substance sur l'électrode, caractérisée en ce que ladite couche, dite première couche, est revêtue d'une couche mince conductrice, dite seconde couche, réalisée en un oxyde conducteur transparent différent de celui de ladite première couche et permettant de diminuer, dans les conditions de fonctionnement de la cellule, la surtension sur l'électrode, la conductivité électrique et la transmission optique de ladite électrode étant peu diminuées par rapport à celles de ladite première couche.

2. Electrode selon la revendication 1, caractérisée en ce que ladite cellule étant une cellule à dépôt d'argent, ladite première couche est en oxyde d'indium dopé à l'étain et ladite seconde couche est en oxyde d'étain dopé à l'antimoine.

3. Electrode selon la revendication 1, caractérisée en ce que ladite cellule étant une cellule à dépôt d'argent, ladite première couche est en oxyde d'indium dopé à l'étain et ladite seconde couche est en oxyde d'étain dopé au cadmium.

4. Electrode selon l'une quelconque les revendications 1 à 3, caractérisée en ce que les épaisseurs respectives de ladite première couche et de ladite seconde couche sont telles que l'ensemble formé par les deux couches présente une résistance carrée de 20 à 25 ohms par carré et une transmission optique de 70 à 80%.

5. Electrode selon l'une quelconque des revendications 2 et 3, caractérisée en ce que l'épaisseur de ladite première couche est comprise entre 1000 Å et 1 micron et l'épaisseur de ladite seconde couche est comprise entre 100 et 500 Å.

6. Procédé de fabrication d'une électrode selon la revendication 1, caractérisé en ce que l'on dépose successivement sur un support isolant électrique une première couche d'un matériau conducteur de l'électricité et une seconde couche d'une autre matériau conducteur de l'électricité, et en ce que l'on réalise successivement une gravure électrochimique de ladite seconde couche et une gravure chimique de ladite première couche.

7. Procédé selon la revendication 6, caractérisé en ce que l'on dépose ladite première couche et ladite seconde couche par pulvérisation cathodique radiofréquence.

8. Procédé selon l'une quelconque des revendications 6 et 7, caractérisé en ce qu'après avoir déposé ladite première couche, on soumet cette dernière à un traitement de surface pour éviter la formation d'un film isolant électrique sur ladite première couche.

9. Procédé selon la revendication 8, caractérisé en ce que ledit traitement de surface consiste à soumettre ladite première couche à un bombardement ionique afin de nettoyer et dégazer ladite première couche.

10. Procédé selon l'une quelconque des revendications 6 à 9, caractérisé en ce que ladite première couche est en oxyde d'indium dopé à l'étain et la second couche en oxyde d'étain dopé à l'antimoine ou au cadmium.

11. Procédé selon l'une quelconque des revendications 6 à 10, caractérisé en ce qu'après avoir déposé ladite première couche, on soumet cette dernière à un traitement de recuit avant de déposer ladite seconde couche.

12. Procédé selon l'une quelconque des revendications 6 à 11, caractérisé en ce que l'on réalise la gravure de ladite seconde couche par réduction électrochimique en milieu acide.

## Claims

1. An electrode for an electrolytic display cell comprising a transparent conducting oxide layer having a configuration suitable for display purposes, deposited on an electrically insulating support, said conducting oxide being able to be transformed by secondary reactions in the presence of a substance on the electrode, characterized in that said first layer is coated with a thin second conducting layer made from a transparent conducting oxide which differs from that of said first layer and which makes it possible under the operating conditions of the cell to limit the overvoltage on the electrode, the optical transmission and the electrical conduction characteristics of said electrode being slightly reduced with respect to those of said first layer.

2. An electrode according to claim 1, characterized in that said cell is a silver deposit cell, said first layer is a tin-doped indium oxide layer and said second layer is an antimony-doped tin oxide layer.

3. An electrode according to claim 1, characterized in that, said cell is a silver deposit cell, said first layer is a tin-doped indium oxide layer and said second layer is a cadmium-doped tin oxide layer.

4. An electrode according to any one of claims 1 to 3, characterized in that the respective thicknesses of said first and second layers are such that the assembly formed by the two layers has a square resistance of 20 to 25 Ohms per square and an optical transmission of 70 to 80%.

5. An electrode according to any one of claims 2 and 3, characterized in that the thickness of said first layer is between 1,000 Å and 1 micron and the thickness of said second layer is between 100 and 500 Å.

6. A process for the preparation of an electrode according to claim 1, characterized in that a first layer of an electricity-conducting material and a second layer of another electricity-conducting material are successively deposited on an insulating support and successively said second layer is electrochemically etched and said first layer is chemically etched.

7. A process according to claim 6, characterized in that said first and second layers are deposited by radiofrequency cathodic sputtering.

8. A process according to any one of claims 6 and 7, characterized in that after depositing said first layer, this later undergoes a surface treatment to prevent the formation of an electrically insulating film on said first layer.

9. A process according to claim 8, characterized in that said surface treatment consists of subjecting said first layer to ion bombardment to clean and degas said first layer.

10. A process according to any one of claims 6 to 9, characterized in that said first layer is made from indium oxide doped with tin and the second layer from tin oxide doped with antimony or cadmium.

11. A process according to any one of claims 6 to 10, characterized in that, after deposition, said first layer is subjected to an annealing treatment before depositing said second layer.

12. A process according to any one of claims 6 to 11, characterized in that said second layer is etched by electrochemical reduction in an acid medium.

**Patentansprüche**

1. Elektrode für eine elektrolytische Anzeigezelle mit einer in Form eines anzuzeigenden Symbols auf einer elektrisch isolierenden Unterlage deponierten, durchsichtigen Schicht aus einem leitenden Oxid, welches durch sekundäre Reaktionen in Gegenwart einer Substanz auf der Elektrode umwandelbar ist, dadurch gekennzeichnet, daß die genannte, erste Schicht mit einer dünnen zweiten Schicht überzogen ist, welche aus einem von dem der ersten Schicht verschiedenen, durchsichtigen, leitenden Oxid gebildet ist und unter Betriebsbedingungen der Zelle Überspannungen an der Elektrode zu verringern geeignet ist, ohne daß die elektrische Leitfähigkeit und die optische Durchlässigkeit der Elektrode in bezug auf diejenige der ersten Schicht wesentlich verringert sind.

2. Elektrode nach Anspruch 1, dadurch gekennzeichnet, daß die Zelle eine Silberdeponatzelle ist, daß die erste Schicht aus mit Zinn dotiertem Indiumoxid ist und daß die zweite Schicht aus mit Antimon dotiertem Zinnoxid ist.

3. Elektrode nach Anspruch 1, dadurch gekennzeichnet, daß die Zelle eine Silberdeponatzelle ist, daß die erste Schicht aus mit Zinn dotiertem Indiumoxid ist und daß die zweite Schicht aus mit Cadmium dotiertem Zinnoxid ist.

4. Elektrode nach wenigstens einem der Ansprüche 1 bis 3, dadurch gekennzeichnet, daß die erste und die zweite Schicht jeweils eine solche Dicke haben, daß das aus den beiden Schichten geformte Gebilde einen Flächenwiderstand von 20 bis 25 Ohm pro Quadrat une eine optische Durchlässigkeit von 70 bis 80% aufweist.

5. Elektrode nach Anspruch 2 oder 3, dadurch gekennzeichnet, daß die Stärke der ersten Schicht 1000 Å bis 1 $\mu$m die Stärke der zweiten Schicht 100 bis 500 Å beträgt.

6. Verfahren zum Herstellen einer Elektrode nach Anspruch 1, dadurch gekennzeichnet, daß man auf eine elektrisch isolierende Unterlage nacheinander eine erste Schicht aus einem elektrisch leitenden Material und eine zweite Schicht aus einem anderen elektrisch leitenden Material aufträgt und daß man die zweite und die erste Schicht nacheinander einer elektrochemischen bzw. einer chemischen Ätzung unterwirft.

7. Verfahren nach Anspruch 6, dadurch gekennzeichnet, daß man die erste und die zweite Schicht durch Hochfrequenz-Kathodenzerstäubung aufbringt.

8. Verfahren nach Anspruch 6 oder 7, dadurch gekennzeichnet, daß man die erste Schicht nach dem Aufbringen derselben einer Oberflächenbehandlung zum Verhindern der Bildung einer elektrisch isolierenden Schicht darauf unterwirft.

9. Verfahren nach Anspruch 8, dadurch gekennzeichnet, daß die Oberflächenbehandlung darin besteht, daß man die erste Schicht einem Ionenbeschuß zur Reinigung und Entgasung derselben aussetzt.

10. Verfahren nach wenigstens einem der Ansprüche 6 bis 9, dadurch gekennzeichnet, daß die erste Schicht aus mit Zinn dotiertem Indiumoxid und die zweite Schicht aus mit Antimon oder Cadmium dotiertem Zinnoxid ist.

11. Verfahren nach wenigstens einem der Ansprüche 6 bis 10, dadurch gekennzeichnet, daß man die erste Schicht nach dem Aufbringen derselben und vor dem Aufbringen der zweiten Schicht einer Glühbehandlung unterwirft.

12. Verfahren nach wenigstens einem der Ansprüche 6 bis 11, dadurch gekennzeichnet, daß man das Ätzen der zweiten Schicht durch elektrochemische Reduktion in einem sauren Medium ausführt.

FIG. 1

FIG. 2